# EUROPÄISCHE PATENTSCHRIFT

(11) **EP 3 931 460 B1**
(45) Veröffentlichungstag und Bekanntmachung des Hinweises auf die Patenterteilung: **06.03.2024**
(21) Anmeldenummer: 20701599.1
(22) Anmeldetag: 22.01.2020
(51) Int. Cl.: F16F 9/04, F16F 9/05, B60G 11/27, B60G 15/12, B60G 17/052

(54) **LUFTFEDERMODUL**
PNEUMATIC SPRING MODULE
MODULE DE RESSORT PNEUMATIQUE

(30) Priorität: 25.02.2019 DE 102019104714
(43) Veröffentlichungstag der Anmeldung: 05.01.2022
(73) Patentinhaber: Vibracoustic SE, 69469 Weinheim (DE)
(72) Erfinder: WERNER, Philipp, 21339 Lüneburg (DE); MOOG, Erhard, 27419 Sittensen (DE)
(74) Vertreter: Patentanwälte Olbricht Buchhold Keulertz
(86) Internationale Anmeldenummer: PCT/EP2020/051494
(87) Internationale Veröffentlichungsnummer: WO 2020/173623

(56) Entgegenhaltungen:
- WO-A1-2016/168500
- US-A1- 2015 210 138
- US-A1- 2018 298 974

## Beschreibung

Die Erfindung betrifft ein Luftfedermodul mit einer Luftfeder und einem Stoßdämpfer zur Federung und Dämpfung von Schwingungen eines Fahrzeugfahrwerkes, wobei die Luftfeder einen Rollbalg aufweist, der an einem Luftfederdeckel und einem Abrollkolben befestigt ist, wobei der Rollbalg einen mit Druckluft gefüllten ersten Arbeitsraum zumindest teilweise begrenzt, wobei im Abrollkolben mindestens zwei Arbeitsräume vorgesehen sind, welche durch eine Zwischenwand voneinander getrennt sind und über schaltbare, im Abrollkoben angeordnete Ventile mit dem ersten Arbeitsraum verbindbar sind.

Ein derartiges Luftfedermodul ist aus der EP 288 503 B1 bekannt. Hierbei wird der erste Arbeitsraum im Wesentlichen durch den Rollbalg begrenzt. Im Abrollkolben sind ein zweiter und ein dritter Arbeitsraum vorgesehen, die mittels zugeordneter Ventile mit dem ersten Arbeitsraum verbindbar sind. Das zur Verfügung stehende Luftfedervolumen beziehungsweise die Federrate kann somit durch Ansteuerung der Ventile der im Abrollkolben angeordneten Arbeitsräume eingestellt werden. Bei dem bekannten Luftfedermodul sind der zweite und der dritte Arbeitsraum in Axialrichtung übereinander angeordnet. Da die Arbeitsräume nicht einstückig herstellbar sind, müssen sie aus mehreren Bauteilen gefügt werden. Hierdurch sind mehrere Fügezonen erforderlich. Die den Arbeitsräumen zugeordneten Ventile sind in Axialrichtung versetzt positioniert. Da die Ventile versetzt angeordnet sind, erschwert diese eine automatisierte Montage der Ventile.

Weiterhin offenbart das Dokument US2015/210138A1 ein Luftfedermodul, das die Merkmale des Oberbegriffs des Anspruchs 1 aufweist.

Der Erfindung liegt die Aufgabe zugrunde, ein Luftfedermodul vorzuschlagen, das eine vereinfachte Herstellung des Mehrkammerabrollkolbens sowie eine zuverlässige automatisierte Montage der Ventile ermöglicht.

Zur Lösung dieser Aufgabe wird bei einem Luftfedermodul der eingangs genannten Art vorgeschlagen, dass der Abrollkolben mindestens zwei Arbeitsräume aufweist, die nebeneinanderliegend angeordnet sind. Die beiden Arbeitsräume stellen Zusatzvolumen dar, die mittels der Ventile der ersten Arbeitskammer zuschaltbar sind. Hierdurch kann die Federrate der Luftfeder eingestellt werden. Die erfindungsgemäße Luftfeder kann zwei Arbeitskammern aber auch drei, vier oder mehr Arbeitskammern im Abrollkolben enthalten. Da die Arbeitskammern des Abrollkolbens nebeneinander angeordnet sind, können die zugeordneten Ventile alle in einem einzigen Bauteil angeordnet werden. Die Lagetoleranzen der Ventile werden dadurch nicht durch die Genauigkeit der Fügezonen der Bauteile des Abrollkolbens beeinflusst. Alle Ventile können gleichzeitig durch eine einzige Vorrichtung platziert werden, ohne dass ein Ausgleich der Lagetoleranzen zueinander vorgenommen werden muss. Somit ist eine zuverlässige automatisierte Montage der Ventile mit einer einfachen, kostengünstigen Vorrichtung möglich. Weiterhin zeichnet sich das erfindungsgemäße Luftfedermodul durch eine geringe Bauhöhe aus.

Vorteilhafte Ausgestaltungen der Erfindung sind Gegenstand der Unteransprüche.

Vorteilhaft sind die Ventile in einer horizontalen Ebene angeordnet. Hierdurch sind die Lagetoleranzen besonders gering, wodurch eine einfache Bestückung und Montage möglich wird.

Vorteilhaft sind die Ventile in einem Kolbenunterteil angeordnet, das mit einem Kolbenoberteil des Abrollkolbens verbunden ist. Die Verbindung kann insbesondere mittels Verschweißung erfolgen.

Bei einer vorteilhaften Weiterbildung weist das Kolbenunterteil mindestens zwei Ventilaufnahmen für ein Ventil auf.

An den Ventilaufnahmen sind mit dem Ventil ansteuerbare Luftöffnungen vorgesehen. Diese können abhängig von der Ventilstellung angesteuert werden.

Vorteilhaft umgeben die mindestens zwei Arbeitsräume des Abrollkolbens das Zylinderrohr des Stoßdämpfers teilweise. Hierdurch wird eine gute Ausnutzung des zur Verfügung stehenden Raumes gewährleistet.

Eine einfache Herstellung kann dadurch erfolgen, dass das Kolbenoberteil als einteiliges Bauteil ausgebildet ist. Insbesondere kann das Kolbenoberteil als Spritzgussteil aus Kunststoff hergestellt werden.

Bei einer vorteilhaften Ausgestaltung sind zur Bildung der Arbeitsräume Trennwände vorgesehen, die in Umfangsrichtung versetzt angeordnet sind, wobei die Trennwände vorzugsweise in dem Kolbenoberteil integriert sind und sich in Axialrichtung erstrecken.

Vorteilhaft ist der Rollbalg an dem Kolbenoberteil festgelegt.

Dabei kann das Kolbenoberteil einen stirnseitig abragenden Flansch zur Festlegung des Rollbalgs aufweisen.

Bei einer vorteilhaften Weiterbildung ist vorgesehen, dass dem abragenden Flansch ein Stützring zugeordnet ist. Dieser ist insbesondere aus Metall hergestellt.

In vorteilhafter Weiterbildung kann das Kolbenoberteil rotationssymmetrisch ausgebildet sein und bereichsweise eine radiale Erweiterung aufweisen.

Vorteilhaft ist das Kolbenoberteil mit dem Kolbenunterteil einteilig verbunden, insbesondere verschweißt.

Bei einer vorteilhaften Ausgestaltung ist der Abrollkolben aus zwei oder drei miteinander verschweißten Kunststoffteilen gebildet. Die Anzahl der Arbeitskammern kann dabei durch die Anzahl der Trennwände variiert werden, ohne Erhöhung der Anzahl der Bauteile oder der Anzahl der Schweißnähte.

Erfindungsgemäß sind im Kolbenunterteil mehrere Arbeitsräume durch zusätzliche vertikale, in Umfangsrichtung versetzt angeordnete Trennwände abgetrennt, die jeweils mittels eines zugeordneten Ventils zuschaltbar sind. Hierdurch können weitere Zusatzvolumen zur Einstellung der Federrate des Luftfedermoduls zugeschaltet werden.

Vorteilhaft sind die Teile des Abrollkolbens als Spritzgussteile aus Kunststoff hergestellt und miteinander verschweißt.

Vorteilhaft sind die Teile des Abrollkolbens mittels Heißgasschweißen, Infrarotschweißen, Reibschweißen oder Orbitalschweißen miteinander verschweißt.

Nachfolgend wird die Erfindung anhand von Ausführungsbeispielen näher erläutert, die in schematischer Weise in den beigefügten Zeichnungen dargestellt sind. Hierbei zeigen:
- Fig. 1: einen schematischen Längsschnitt durch eine erste Ausführungsvariante des erfindungssgemäßen Luftfedermoduls;
- Fig. 2: einen Schnitt längs der Linie II-II in Fig. 1;
- Fig. 3: einen Schnitt längs der Linie III-III in Fig. 1;
- Fig. 4: einen Schnitt längs der Linie IV-IV in Fig. 1;
- Fig. 5: einen schematischen Längsschnitt durch eine zweite Ausführungsvariante des erfindungssgemäßen Luftfedermoduls;
- Fig. 6: einen Schnitt längs der Linie VI-VI in Fig. 5;
- Fig. 7: einen Schnitt längs der Linie VII-VII in Fig. 5 und
- Fig. 8: einen Schnitt durch das Kolbenunterteil bei einer dritten Ausführungsvariante des erfindungssgemäßen Luftfedermoduls.

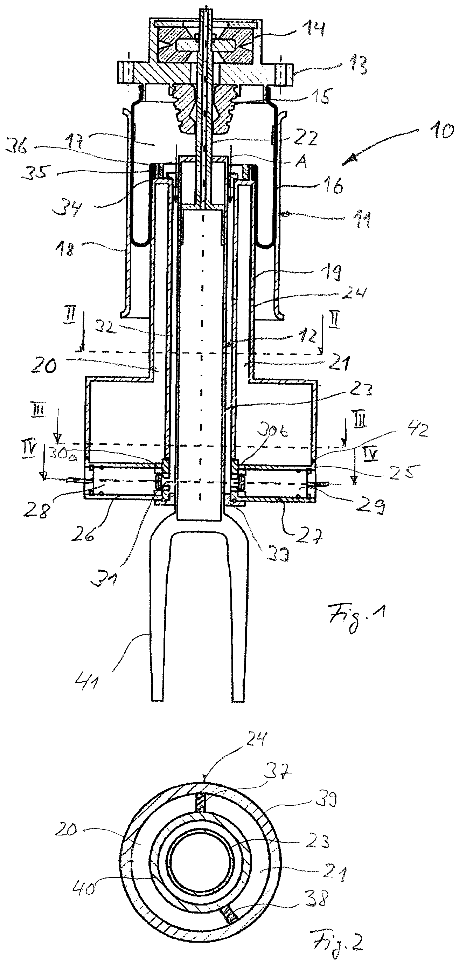

Das in Fig. 1 dargestellte Luftfedermodul 10 weist eine Luftfeder 11 und einen Stoßdämpfer 12 auf, die zur Federung und Dämpfung von Schwingungen eines nicht dargestellten Kraftfahrzeugfahrwerkes dienen. Die Luftfeder 11 weist einen Rollbalg 16 auf, der einerseits an einem Deckel 13 und andererseits an einem Abrollkolben 19 befestigt ist. Der Rollbalg 16 begrenzt einen ersten Arbeitsraum 17, der mit Druckluft befüllt ist. Am Außenumfang wird der Rollbalg 16 mittels einer Außenführung 18 geführt. Der Rollbalg 16 rollt an dem Außenumfang des Abrollkolbens 19 unter Ausbildung einer Rollfalte ab.

Der Stoßdämpfer 12 des Luftfedermoduls 10 weist ein Zylinderrohr 23 auf. In dem Zylinderrohr 23 ist eine Kolbenstange 22 aufgenommen, die endseitig an einem Stützlager 14 gelagert ist, das in dem Deckel 13 aufgenommen ist. Ein Anschlagpuffer 15 dient zur Dämpfung von großen Auslenkungen der Kolbenstange 22.

Der Abrollkolben 19 weist eine Außenwand 39 und eine radial innenliegende Innenwand 40 auf. Die Innenwand 40 begrenzt mit dem Zylinderrohr 23 einen Ringkanal 32, der sich in Radialrichtung des Luftfedermoduls 10 erstreckt.

Der Abrollkolben 19 stützt sich über eine untere Abstützung 33 und eine obere Abstützung 34 an dem Zylinderrohr 23 des Stoßdämpfers 12 ab. Die obere Abstützung 34 ist mit Luftkanälen versehen, was durch den Pfeil A angedeutet ist. Somit ist der Ringkanal 32 mit dem ersten Arbeitsraum 17 verbunden.

Zur Befestigung des Rollbalgs 16 an dem Abrollkolben 19 ragt ein Flansch 35 stirnseitig von dem Abrollkolben 19 ab. Am Außenumfang des Flansches 35 ist der Rollbalg 16 mittels einer Schlauchschelle festgelegt. Dem Flansch 35 ist ein Stützring 36 zugeordnet, der aus Metall besteht.

Der Abrollkolben 19 weist ein Kolbenoberteil 24 und ein Kolbenunterteil 25 auf, die jeweils aus Kunststoff hergestellt sind. Die Verbindung des Kolbenoberteils 24 und des Kolbenunterteils 25 erfolgt über eine Schweißnaht 42. Hierbei kann ein Heißgas-, Infrarot-, Reib- oder Orbitalschweißverfahren zum Einsatz kommen.

Wie aus Fig. 2 hervorgeht, die einen Schnitt längs der Linie II-II in Fig. 1 zeigt, weist das Kolbenoberteil 25 eine Außenwand 39 und eine radial innenliegende Innenwand 40 auf. Die Außenwand 39 und die Innenwand 40 sind über Trennwände 37, 38 miteinander verbunden. Die Trennwände 37, 38 begrenzen einen zweiten Arbeitsraum 20 und einen dritten Arbeitsraum 21, die nebeneinanderliegend in einer Ebene angeordnet sind und ebenfalls mit Druckluft gefüllt sind. Dabei verlaufen die Trennwände 37, 38 in Axialrichtung des Luftfedermoduls 10 und sind bis in das Kolbenunterteil 25 geführt.

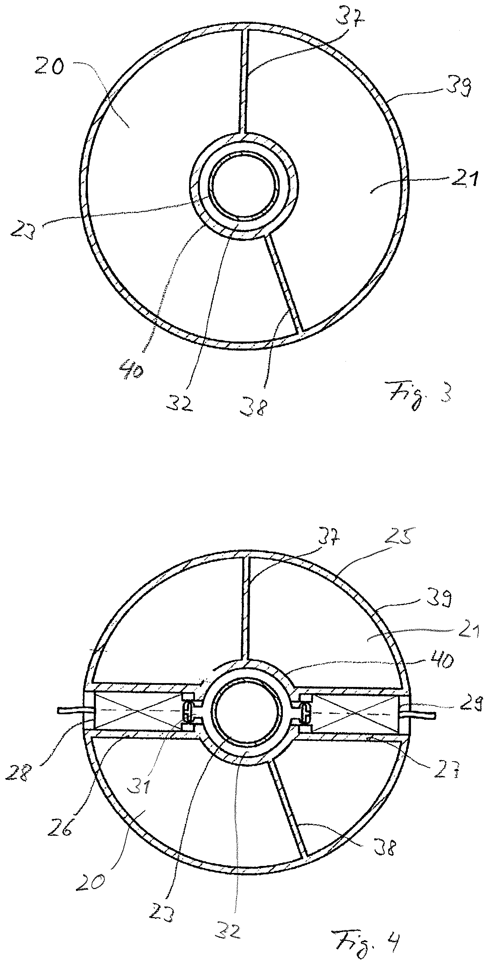

Wie aus Fig. 3 hervorgeht, weist das Kolbenoberteil in seinem unteren Bereich eine radiale Erweiterung gegenüber dem oberen Teil des Kolbenoberteils 24 auf. Auch in diesem Bereich sind die beiden Arbeitsräume 20, 21 durch die Trennwände 37, 38 voneinander getrennt.

Fig. 4 zeigt einen Horizontalschnitt durch das Kolbenunterteil 25 längs der Linie IV-IV in Fig. 1. Das Kolbenunterteil 25 ist einteilig mit dem Kolbenoberteil 24 verbunden. Die Verbindung erfolgt über eine Schweißnaht 42, wobei insbesondere ein Heißgas-, Infrarot-, Reib- oder Orbitalschweißverfahren zur Verbindung der beiden aus Kunststoff hergestellten Teile 24, 25 des Abrollkolbens vorgesehen ist. In dem Kolbenunterteil 25 sind ebenfalls die beiden Arbeitsräume 20, 21 durch die beiden Trennwände 37, 38, die in Radialrichtung verlaufen, voneinander getrennt.

Das Kolbenunterteil 25 weist zwei Ventilaufnahmen 26, 27 auf, in denen die Ventile 28, 29 aufgenommen sind. Die elektrisch ansteuerbaren Ventile 28, 29 geben eine Luftöffnung 31 frei, die an der Innenwand 40 des Abrollkolbens 19 vorgesehen ist. In der Offenstellung der Ventile 28, 29 können die Arbeitsräume 20, 21 über den Ringkanal 32 mit dem ersten Arbeitsraum 17 verbunden werden. Hierdurch kann die Federrate der Luftfeder eingestellt werden.

Wie aus Fig. 1 ersichtlich ist, ist an der Ventilaufnahme 26, 27 eine Luftöffnung 30a, 30b vorgesehen, die mit dem zweiten Arbeitsraum 20 und dem dritten Arbeitsraum 21 in Verbindung steht.

Die Ventilaufnahmen 26, 27 sind in dem Kolbenunterteil 25 vorgesehen. Dabei liegen die Ventilaufnahmen 26, 27 beziehungsweise die Ventile 28, 29 in einer Ebene. Hierdurch ist die Bestückung des Abrollkolbens 19 mit den Ventilen 28, 29 in einfacher Weise möglich, so dass die Montage automatisiert mit nur einer einzigen Vorrichtung ohne Ausgleichsvorrichtungen der Lagetoleranzen zueinander zuverlässig durchgeführt werden kann. Weiterhin wird durch diese Bauweise eine geringe Bauhöhe des Luftfedermoduls 10 erzielt.

Sowohl das Kolbenoberteil 24 als auch das Kolbenunterteil 25 sind als Spritzgussteile aus Kunststoff hergestellt. Grundsätzlich können die genannten Teile auch als Blechkonstruktion oder mittels Aluminium-Druckguss hergestellt werden. Die Trennwände 37, 38 sind einteilig an den Kolbenteilen 24, 25 ausgebildet. Hierdurch ist eine einfache Herstellung des Abrollkolbens 19 aus wenigen Bauteilen möglich.

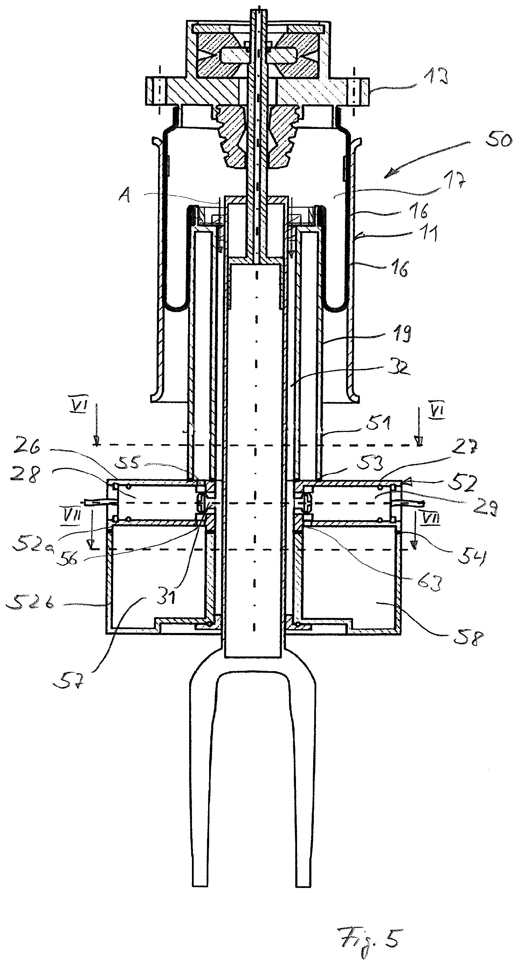

Fig. 5 zeigt eine zweite Ausführungsform des erfindungssgemäßen Luftfedermoduls 10. In der nachfolgenden Beschreibung werden die bereits oben verwendeten Begriffe für gleiche oder funktionsgleiche Teilen verwendet.

Fig. 5 zeigt einen Längsschnitt durch ein Luftfedermodul 50, das sich von dem in Fig. 1 dargestellten Luftfedermodul 10 lediglich durch den konstruktiven Aufbau des Abrollkolbens 19 unterscheidet. Dieser weist ein Kolbenoberteil 51 auf, das als Kunststoffspritzteil hergestellt ist. Das Kolbenoberteil 51 ist über eine Schweißnaht 53 mit dem Kolbenunterteil 52 verbunden.

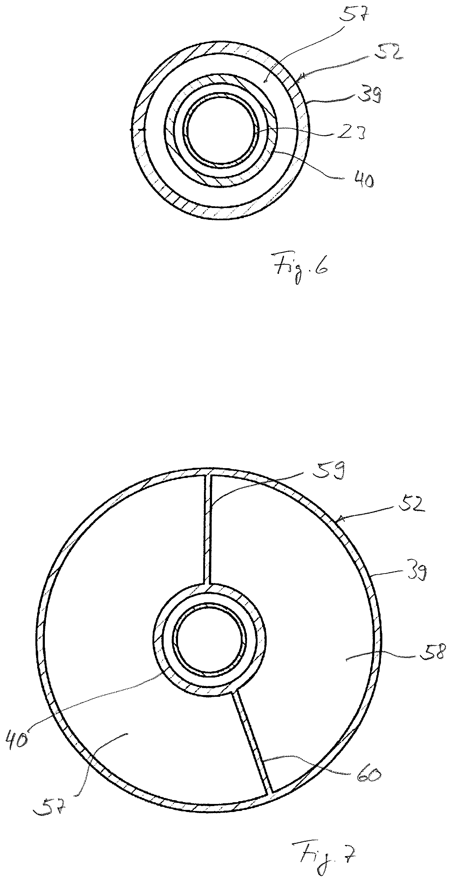

Fig. 6 zeigt einen Schnitt längs der Linie VI-VI in Fig. 5. Das Kolbenoberteil weist eine Außenwand 39 und eine Innenwand 40 auf, die einen zweiten Arbeitsraum 57 begrenzen. Im Bereich des Kolbenoberteils 52 ist keine Trennwand vorgesehen. Somit umgibt in diesem Bereich der zweite Arbeitsraum 20 das Zylinderrohr 23.

Das Kolbenunterteil 52 weist ein erstes Teil 52a auf, in dem die Ventilaufnahmen 26, 27 zur Aufnahme der Ventile 28, 29 vorgesehen sind. Das erste Teil 52a ist mit einem zweiten Teil 52b, das den Boden des Abrollkolbens 19 bildet, über eine Schweißnaht 54 verbunden.

Das Kolbenunterteil 52 ist gegenüber dem Kolbenoberteil 51 in Radialrichtung erweitert ausgebildet. Der zweite Arbeitsraum 57 erstreckt sich von dem Kolbenoberteil 51, wie aus Fig. 7 ersichtlich ist, die einen Schnitt längs der Linie VII-VII in Fig. 5 zeigt.

In diesem Bereich weist das Kolbenunterteil 52 in Umfangsrichtung versetzte Trennwände 59, 60 auf, die den zweiten Arbeitsraum 57 von dem dritten Arbeitsraum 58 derart abtrennen, dass diese den Stoßdämpfer 12 nur teilweise umgeben.

Die Arbeitsräume 57, 58 können über die zugeordneten Ventile 28, 29 separat angesteuert werden. Bei Ansteuerung der Ventile 28, 29 werden die Luftöffnungen 55, 56, 63 freigegeben. Hierdurch können der zweite und der dritte Arbeitsraum 57,58 mit dem ersten Arbeitsraum 17 über den Ringkanal 32 verbunden werden.

Durch die Anordnung der Ventile 28, 29 in einer Ebene ist die Herstellung und Bestückung des Luftfedermoduls 50 in einfacher Weise möglich. Außerdem ergibt sich eine geringe Bauhöhe des Moduls, da die Arbeitsräume 57, 58 nebeneinanderliegend angeordnet sind.

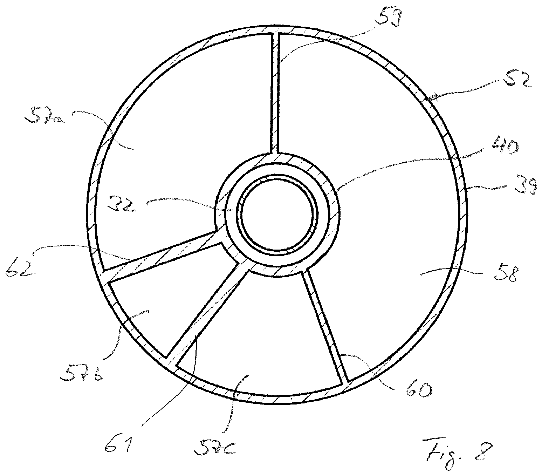

Fig. 8 zeigt eine weitere Ausführungsvariante des erfindungssgemäßen Luftfedermoduls 50 im Bereich des Kolbenunterteils 52. Hierbei ist der zweite Arbeitsraum 57 in weitere Teilräume 57a, 57b, 57c unterteilt, die mittels Trennwänden 61, 62 voneinander getrennt sind. Prinzipiell kann der zur Verfügung stehende Bauraum mittels der Trennwände 59, 60, 61, 62 belieb um den Umfang aufgeteilt werden. Dabei können die Trennwände 59, 60, 61, 62 wie im, Ausführungsbeispiel gemäß Fig. 1 in das Kolbenoberteil fortgeführt werden oder, wie in Fig. 5 dargestellt, lediglich das Kolbenunterteil in weitere Kammern aufteilen .Den Teilräumen 57a, 57b, 57c sind nicht dargestellte Ventile zugeordnet, mit denen über ebenfalls nicht dargestellte Luftöffnungen die Teilräume 57a, 57b, 57c über den Ringkanal 32 mit dem ersten Arbeitsraum 17 verbindbar sind.

### Bezugszeichenliste

- 10: Luftfedermodul
- 11: Luftfeder
- 12: Stoßdämpfer
- 13: Luftfederdeckel
- 14: Stützlager
- 15: Anschlagpuffer
- 16: Rollbalg
- 17: erster Arbeitsraum
- 18: Außenführung
- 19: Abrollkolben
- 20: zweiter Arbeitsraum
- 21: dritter Arbeitsraum
- 22: Kolbenstange
- 23: Zylinderrohr
- 24: Kolbenoberteil
- 25: Kolbenunterteil
- 26: Ventilaufnahme
- 27: Ventilaufnahme
- 28: Ventil
- 29: Ventil
- 30: Luftöffnung
- 31: Luftöffnung
- 32: Ringkanal
- 33: untere Abstützung
- 34: obere Abstützung
- 35: Flansch
- 36: Stützring
- 37: Trennwand
- 38: Trennwand
- 39: Außenwand
- 40: Innenwand
- 41: Dämpfergabel
- 42: Schweißnaht
- 50: Luftfedermodul
- 51: Kolbenoberteil
- 52: Kolbenunterteil
- 53: Schweißnaht
- 54: Schweißnaht
- 55: Luftöffnung
- 56: Luftöffnung
- 57: zweiter Arbeitsraum
- 58: dritter Arbeitsraum
- 59: Trennwand
- 60: Trennwand
- 61: Trennwand
- 62: Trennwand
- 63: Luftöffnung

## Patentansprüche

1. Luftfedermodul (10, 50) mit einer Luftfeder (11) und einem Stoßdämpfer (12) zur Federung und Dämpfung von Schwingungen eines Kraftfahrzeugfahrwerkes, wobei die Luftfeder (11) einen Rollbalg (16) aufweist, der an einem Luftfederdeckel (13) und einem Abrollkolben (19) mit einem Kolbenunterteil (25) befestigt ist, wobei der Rollbalg (16) einen mit Druckluft gefüllten ersten Arbeitsraum (17) zumindest teilweise begrenzt, wobei im Abrollkolben (19) mindestens zwei Arbeitsräume (20, 21; 57, 58) vorgesehen sind, welche durch eine Trennwand (37, 38; 59, 60) voneinander getrennt sind und über schaltbare, im Abrollkolben (19) angeordnete Ventile (28, 29) mit dem ersten Arbeitsraum (17) verbindbar sind, wobei der Abrollkolben (19) mindestens zwei Arbeitsräume (20, 21; 57,58) aufweist, die nebeneinanderliegend angeordnet sind, **dadurch gekennzeichnet, dass** im Kolbenunterteil (25) mehrere Arbeitsräume (57a, 57b, 57c, 58) durch zusätzliche, vertikale, in Umfangsrichtung versetzt angeordnete Trennwände (59, 60, 61, 62) abgetrennt sind, die jeweils mittels eines zugeordneten Ventils (28, 29) zuschaltbar sind.

2. Luftfedermodul nach Anspruch 1, **dadurch gekennzeichnet, dass** die Ventile (28, 29) in einer horizontalen Ebene angeordnet sind.

3. Luftfedermodul nach einem der vorhergehenden Ansprüche, **dadurch gekennzeichnet, dass** die Ventile (28, 29) in dem Kolbenunterteil (25) angeordnet sind, das mit einem Kolbenoberteil (24) des Abrollkolbens (19) verbunden, insbesondere verschweißt, ist.

4. Luftfedermodul nach einem der vorhergehenden Ansprüche, **dadurch gekennzeichnet, dass** das Kolbenunterteil (25) mindestens zwei Ventilaufnahmen (26, 27) für ein Ventil (28, 29) aufweist.

5. Luftfedermodul nach einem der vorhergehenden Ansprüche, **dadurch gekennzeichnet, dass** die Ventilaufnahme (26, 27) mit dem Ventil (28, 29) ansteuerbare Luftöffnungen (30, 31; 55, 56, 63) aufweist.

6. Luftfedermodul nach einem der vorhergehenden Ansprüche, **dadurch gekennzeichnet, dass** die mindestens zwei Arbeitsräume (20, 21; 57,58) des Abrollkolbens (19) das Zylinderrohr (23) des Stoßdämpfers (12) teilweise umgeben.

7. Luftfedermodul nach einem der vorhergehenden Ansprüche, **dadurch gekennzeichnet, dass** das Kolbenoberteil (24) als einteiliges Bauteil ausgebildet ist.

8. Luftfedermodul nach einem der vorhergehenden Ansprüche, **dadurch gekennzeichnet, dass** zur Bildung der Arbeitsräume (20, 21; 57, 58) Trennwände (37, 38) vorgesehen sind, die in Umfangsrichtung versetzt angeordnet sind, wobei die Trennwände (37, 38) vorzugsweise in dem Kolbenoberteil (24) integriert sind.

9. Luftfedermodul nach einem der vorhergehenden Ansprüche, **dadurch gekennzeichnet, dass** der Rollbalg (16) an dem Kolbenoberteil (24) festgelegt ist.

10. Luftfedermodul nach einem der vorhergehenden Ansprüche, **dadurch gekennzeichnet, dass** das Kolbenoberteil (24) einen abragenden Flansch (35) zur Festlegung des Rollbalgs (16) aufweist.

11. Luftfedermodul nach einem der vorhergehenden Ansprüche, **dadurch gekennzeichnet, dass** dem abragenden Flansch (35) ein Stützring (36) zugeordnet ist.

12. Luftfedermodul nach einem der vorhergehenden Ansprüche, **dadurch gekennzeichnet, dass** das Kolbenoberteil (24) rotationssymmetrisch ausgebildet ist und bereichsweis eine radiale Erweiterung aufweist.

13. Luftfedermodul nach einem der vorhergehenden Ansprüche, **dadurch gekennzeichnet, dass** das Kolbenoberteil (24) mit dem Kolbenunterteil (25) einteilig verbunden, insbesondere verschweißt, ist.

14. Luftfedermodul nach einem der vorhergehenden Ansprüche, **dadurch gekennzeichnet, dass** der Abrollkolben (19) aus zwei oder drei miteinander verschweißten Kunststoffteilen hergestellt ist.

15. Luftfedermodul nach einem der vorhergehenden Ansprüche, **dadurch gekennzeichnet, dass** die Teile des Abrollkolbens (19) als Spritzgussteile aus Kunststoff hergestellt sind, die vorzugsweise mittels Heißgasschweißen, Infrarotschweißen, Reibschweißen oder Orbitalschweißen miteinander verschweißt sind.

## Claims

1. Pneumatic spring module (10, 50) having a pneumatic spring (11) and a shock absorber (12) for springing and damping vibrations of a motor vehicle running gear, wherein the pneumatic spring (11) has a rolling bellows (16) which is fastened to a pneumatic spring cover (13) and a roll-off piston (19) having a piston lower part (25), wherein the rolling bellows (16) at least partially delimits a first working chamber (17) filled with compressed air, wherein provided in the roll-off piston (19) are at least two working chambers (20, 21; 57, 58), which are mutually separated by a divider wall (37, 38; 59, 60) and are connectable to the first working chamber (17) by way of switchable valves (28, 29) disposed in the roll-off piston (19), wherein the roll-off piston (19) has at least two working chambers (20, 21; 57, 58) which are disposed next to one another, **characterized in that** in the piston lower part (25) a plurality of working chambers (57a, 57b, 57c, 58) are separated by additional vertical divider walls (59, 60, 61, 62) that are disposed so as to be offset in the circumferential direction and are in each case able to be switched on by means of an assigned valve (28, 29).

2. Pneumatic spring module according to Claim 1, **characterized in that** the valves (28, 29) are disposed in a horizontal plane.

3. Pneumatic spring module according to one of the preceding claims, **characterized in that** the valves (28, 29) are disposed in the piston lower part (25) which is connected, in particular welded, to a piston upper part (24) of the roll-off piston (19).

4. Pneumatic spring module according to one of the preceding claims, **characterized in that** the piston lower part (25) has at least two valve receptacles (26, 27) for a valve (28, 29).

5. Pneumatic spring module according to one of the preceding claims, **characterized in that** the valve receptacle (26, 27) has air openings (30, 31; 55, 56, 63) which are actuatable by the valve (28, 29).

6. Pneumatic spring module according to one of the preceding claims, **characterized in that** the at least two working chambers (20, 21; 57, 58) of the roll-off piston (19) partially surround the cylinder tube (23) of the shock absorber (12).

7. Pneumatic spring module according to one of the preceding claims, **characterized in that** the piston upper part (24) is configured as an integral component.

8. Pneumatic spring module according to one of the preceding claims, **characterized in that** provided for forming the working chambers (20, 21; 57, 58) are divider walls (37, 38) which are disposed so as to be offset in the circumferential direction, wherein the divider walls (37, 38) are preferably integrated in the piston upper part (24).

9. Pneumatic spring module according to one of the preceding claims, **characterized in that** the rolling bellows (16) is fixedly established on the piston upper part (24).

10. Pneumatic spring module according to one of the preceding claims, **characterized in that** the piston upper part (24) has a protruding flange (35) for fixedly establishing the rolling bellows (16).

11. Pneumatic spring module according to one of the preceding claims, **characterized in that** the protruding flange (35) is assigned a support ring (36).

12. Pneumatic spring module according to one of the preceding claims, **characterized in that** the piston upper part (24) is configured to be rotationally symmetrical and in regions has a radial enlargement.

13. Pneumatic spring module according to one of the preceding claims, **characterized in that** the piston upper part (24) is integrally connected, in particular welded, to the piston lower part (25).

14. Pneumatic spring module according to one of the preceding claims, **characterized in that** the roll-off piston (19) is produced from two or three plastic parts welded to one another.

15. Pneumatic spring module according to one of the preceding claims, **characterized in that** the parts of the roll-off piston (19) are produced from plastics material as injection-moulded parts which are welded to one another preferably by means of hot gas welding, infrared welding, friction welding, or orbital welding.

## Revendications

1. Module de ressort pneumatique (10, 50) comportant un ressort pneumatique (11) et un amortisseur de chocs (12) servant à la suspension et à l'amortissement de vibrations d'un châssis de véhicule automobile, le ressort pneumatique (11) présentant un soufflet déroulant (16) qui est fixé à un couvercle de ressort pneumatique (13) et à un piston à déroulement (19) par une partie inférieure de piston (25), le soufflet déroulant (16) délimitant au moins partiellement un premier espace de travail (17) rempli d'air comprimé, au moins deux espaces de travail (20, 21 ; 57, 58) étant prévus dans le piston à déroulement (19), lesquels sont séparés les uns des autres par une paroi de séparation (37, 38 ; 59, 60) et peuvent être connectés au premier espace de travail (17) par le biais de soupapes (28, 29) pouvant être commutées, disposées dans le piston à déroulement (19), le piston à déroulement (19) présentant au moins deux espaces de travail (20, 21 ; 57, 58) qui sont disposés à côté les uns des autres, **caractérisé en ce que**, dans la partie inférieure de piston (25), plusieurs espaces de travail (57a, 57b, 57c, 58) sont séparés par des parois de séparation (59, 60, 61, 62) supplémentaires, verticales, disposées de manière décalée dans la direction périphérique, lesquelles parois de séparation peuvent être connectées respectivement au moyen d'une soupape (28, 29) associée.

2. Module de ressort pneumatique selon la revendication 1, **caractérisé en ce que** les soupapes (28, 29) sont disposées dans un plan horizontal.

3. Module de ressort pneumatique selon l'une des revendications précédentes, **caractérisé en ce que** les soupapes (28, 29) sont disposées dans la partie inférieure de piston (25) qui est reliée, en particulier soudée, à une partie supérieure de piston (24) du piston à déroulement (19).

4. Module de ressort pneumatique selon l'une des revendications précédentes, **caractérisé en ce que** la partie inférieure de piston (25) présente au moins deux logements de soupape (26, 27) pour une soupape (28, 29).

5. Module de ressort pneumatique selon l'une des revendications précédentes, **caractérisé en ce que** le logement de soupape (26, 27) présente des orifices d'air (30, 31 ; 55, 56, 63) pouvant être commandés par la soupape (28, 29).

6. Module de ressort pneumatique selon l'une des revendications précédentes, **caractérisé en ce que** les au moins deux espaces de travail (20, 21 ; 57,58) du piston à déroulement (19) entourent partiellement le tube cylindrique (23) de l'amortisseur de chocs (12).

7. Module de ressort pneumatique selon l'une des revendications précédentes, **caractérisé en ce que** la partie supérieure de piston (24) est réalisée sous forme de pièce d'un seul tenant.

8. Module de ressort pneumatique selon l'une des revendications précédentes, **caractérisé en ce que**, pour la formation des espaces de travail (20, 21 ; 57, 58), des parois de séparation (37, 38) sont prévues, lesquelles sont disposées de manière décalée dans la direction périphérique, les parois de séparation (37, 38) étant intégrées de préférence dans la partie supérieure de piston (24).

9. Module de ressort pneumatique selon l'une des revendications précédentes, **caractérisé en ce que** le soufflet déroulant (16) est fixé à la partie supérieure de piston (24).

10. Module de ressort pneumatique selon l'une des revendications précédentes, **caractérisé en ce que** la partie supérieure de piston (24) présente un rebord saillant (35) servant à la fixation du soufflet déroulant (16) .

11. Module de ressort pneumatique selon l'une des revendications précédentes, **caractérisé en ce qu'**une bague de support (36) est associée au rebord saillant (35) .

12. Module de ressort pneumatique selon l'une des revendications précédentes, **caractérisé en ce que** la partie supérieure de piston (24) est à symétrie de révolution et présente dans certaines régions un élargissement radial.

13. Module de ressort pneumatique selon l'une des revendications précédentes, **caractérisé en ce que** la partie supérieure de piston (24) est reliée d'un seul tenant, en particulier soudée, à la partie inférieure de piston (25).

14. Module de ressort pneumatique selon l'une des revendications précédentes, **caractérisé en ce que** le piston à déroulement (19) est fabriqué à partir de deux ou trois parties en matière synthétique soudées les unes aux autres.

15. Module de ressort pneumatique selon l'une des revendications précédentes, **caractérisé en ce que** les parties du piston à déroulement (19) sont fabriquées en tant que parties moulées par injection en matière synthétique, qui sont soudées les unes aux autres de préférence par soudage au gaz chaud, par soudage par infrarouge, par soudage par friction ou par soudage orbital.
